# EUROPEAN PATENT APPLICATION

(11) **EP 4 534 175 A1**
(43) Date of publication of application: **09.04.2025**
(21) Application number: 22944792.5
(22) Date of filing: 31.05.2022
(51) Int. Cl.: B01D 53/04, F24F 7/08

(54) **CARBON DIOXIDE RECOVERY DEVICE AND CARBON DIOXIDE RECOVERY METHOD**

(71) Applicant: MITSUBISHI ELECTRIC CORPORATION, Chiyoda-ku Tokyo 100-8310 (JP)
(72) Inventor: INOUE Takumi, Tokyo 100-8310 (JP); TANISHIMA Makoto, Tokyo 100-8310 (JP); ONAKA Yoji, Tokyo 100-8310 (JP); KAWAMOTO Makoto, Tokyo 100-8310 (JP); SHINOKI Toshio, Tokyo 100-8310 (JP); FUKUI Tomoya, Tokyo 100-8310 (JP)
(74) Representative: Meissner Bolte Partnerschaft mbB
(86) International application number: PCT/JP2022/022048
(87) International publication number: WO 2023/233503

(57) **Abstract**

A carbon dioxide recovery device of the present invention includes a blower that is provided in an air flow passage through which air flows between an indoor space and an outdoor space and that forms a flow of air in the air flow passage; an inflow duct through which air flows into the air flow passage; an outflow duct through which air flows out from the air flow passage; and an adsorbent that adsorbs carbon dioxide in air, in which at least one of the inflow duct and the outflow duct is provided with an adsorption area in which the carbon dioxide contained in air is adsorbed by the adsorbent.

## Description

### Technical Field

The present invention relates to a carbon dioxide recovery device and a carbon dioxide recovery method.

### Background Art

Patent Document 1 discloses a device that removes carbon dioxide in air using an adsorbent capable of adsorbing carbon dioxide.

### Citation List

### Patent Document

Patent Document 1: Japanese Unexamined Patent Application Publication JP 2020- 89 891 A

### Summary of Invention

### Problem to be Solved by the Invention

It is required to improve the recovery efficiency of carbon dioxide by the adsorbent.

In view of the above circumstances, the present invention is to provide a carbon dioxide recovery device and a carbon dioxide recovery method capable of improving a recovery efficiency of carbon dioxide.

### Means to Solve the Problem

One aspect of the carbon dioxide recovery device according to the present invention includes a blower that is provided in an air flow passage through which air flows between an indoor space and an outdoor space and that forms a flow of air in the air flow passage; an inflow duct through which air flows into the air flow passage; an outflow duct through which air flows out from the air flow passage; and an adsorbent that adsorbs carbon dioxide in air, in which at least one of the inflow duct and the outflow duct is provided with an adsorption area in which the carbon dioxide contained in air is adsorbed by the adsorbent.

One aspect of a carbon dioxide recovery method according to the present invention is a carbon dioxide recovery method of recovering carbon dioxide by using a carbon dioxide recovery device that includes a blower that is provided in an air flow passage through which air flows between an indoor space and an outdoor space and that forms a flow of air in the air flow passage, an inflow duct through which air flows into the air flow passage, an outflow duct through which air flows out from the air flow passage, and an adsorbent that adsorbs carbon dioxide in air, the carbon dioxide recovery method includes an adsorbing step of bringing the adsorbent into contact with air in an adsorption area provided in at least one of the inflow duct and the outflow duct to adsorb the carbon dioxide onto the adsorbent, in which in the adsorbing step, the blower forms a flow of air in the air flow passage by the blower to cause air to flow in the adsorption area.

Another aspect of the carbon dioxide recovery method according to the present invention is a carbon dioxide recovery method of recovering carbon dioxide by using a carbon dioxide recovery device that includes a total heat exchanger in which an air supply flow passage and an exhaust flow passage are formed and that has a suction blower provided in the air supply flow passage and an exhaust blower provided in the exhaust flow passage, a first inflow duct through which air flows into the air supply flow passage, a first outflow duct through which air flows out from the air supply flow passage, a second inflow duct through which air flows into the exhaust flow passage, a second outflow duct through which air flows out from the exhaust flow passage, and an adsorbent that adsorbs carbon dioxide in air, the carbon dioxide recovery method includes an adsorbing step of bringing the adsorbent into contact with air in an adsorption area provided in at least one of the first inflow duct and the second inflow duct to adsorb the carbon dioxide onto the adsorbent, in which in the adsorbing step, the blower forms a flow of air in the air flow passage or the exhaust flow passage by the suction blower or the exhaust blower to cause air to flow in the adsorption area.

### Effects of Invention

According to the present invention, it is possible to provide a carbon dioxide recovery device and a carbon dioxide recovery method capable of improving a recovery efficiency of carbon dioxide.

### Brief Description of the Drawings

FIG. 1 is a schematic diagram showing a carbon dioxide recovery device according to Embodiment 1.
FIG. 2 is a schematic diagram showing a carbon dioxide recovery device according to a modification example of Embodiment 1.
FIG. 3 is a schematic diagram showing a carbon dioxide recovery device according to Embodiment 2.
FIG. 4 is a schematic diagram showing a carbon dioxide recovery device according to a modification example of Embodiment 2.
FIG. 5 is a schematic diagram showing a carbon dioxide recovery device according to Embodiment 3.
FIG. 6A is a diagram showing an adsorbing step in the carbon dioxide recovery device according to Embodiment 3.
FIG. 6B is a diagram showing a separation step in the carbon dioxide recovery device according to Embodiment 3.
FIG. 7 is a diagram showing a separation step in a carbon dioxide recovery device according to a modification example of Embodiment 3.
FIG. 8 is a schematic diagram showing a carbon dioxide recovery device according to Embodiment 4.
FIG. 9 is a schematic diagram showing a carbon dioxide recovery device according to Embodiment 5.
FIG. 10 is a schematic diagram showing a carbon dioxide recovery device according to Embodiment 6.
FIG. 11 is a schematic diagram showing a carbon dioxide recovery device according to a modification example of Embodiment 6.
FIG. 12 is a block diagram showing a carbon dioxide recovery system according to Embodiment 7.
FIG. 13 is a perspective view showing a carbon dioxide recovery system according to Embodiment 8.

### Description of Embodiments

Hereinafter, an embodiment of the present invention will be described with reference to the drawings. The scope of the present invention is not limited to the following embodiment, and can be changed in any way within the scope of the technical ideas of the present invention.

### Embodiment 1

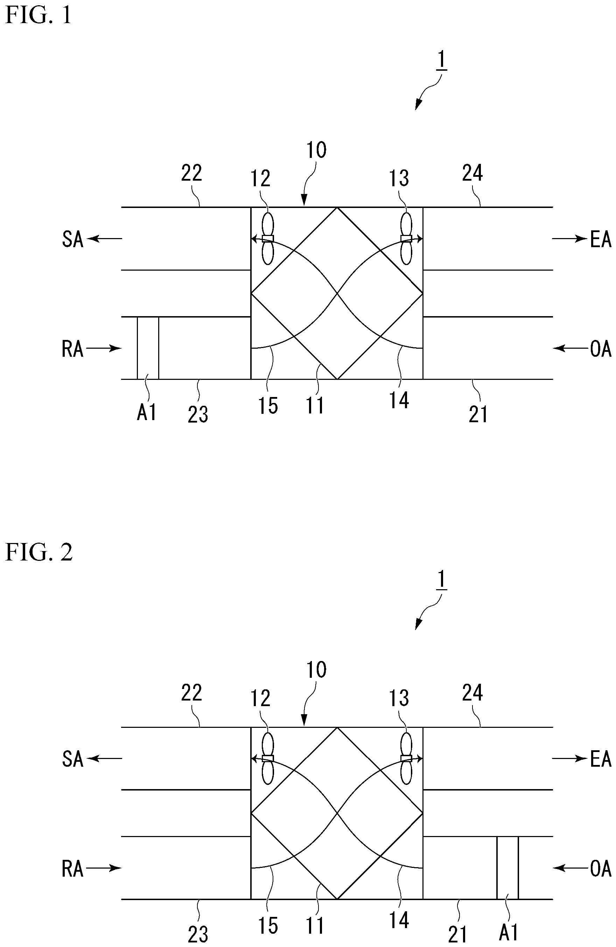

FIG. 1 is a schematic diagram showing a carbon dioxide recovery device 1 according to Embodiment 1.

As shown in FIG. 1, the carbon dioxide recovery device 1 includes an adsorbent, a stationary total heat exchanger 10 (hereinafter, also simply referred to as a "total heat exchanger 10"), a first inflow duct 21, a first outflow duct 22, a second inflow duct 23, and a second outflow duct 24.

The total heat exchanger 10 includes a total heat exchange element 11, a suction blower 12, and an exhaust blower 13. In addition, in the total heat exchanger 10, an air supply flow passage 14 for supplying air from the outdoor space to the indoor space and an exhaust flow passage 15 for discharging air from the indoor space to the outdoor space are formed. The air supply flow passage 14 and the exhaust flow passage 15 are examples of an air flow passage.

A part of the air supply flow passage 14 and a part of the exhaust flow passage 15 are formed in the total heat exchange element 11. The total heat exchange element 11 performs heat exchange between air that flows through the air supply flow passage 14 and air that flows through the exhaust flow passage 15.

The suction blower 12 is installed in the air supply flow passage 14. The suction blower 12 forms a flow of air from the outdoor space to the indoor space.

The exhaust blower 13 is installed in the exhaust flow passage 15. The exhaust blower 13 forms a flow of air from the indoor space to the outdoor space.

The suction blower 12 and the exhaust blower 13 are examples of a blower.

The first inflow duct 21 allows air to flow into the air supply flow passage 14.

The first outflow duct 22 allows the air to flow out from the air supply flow passage 14.

The second inflow duct 23 allows air to flow into the exhaust flow passage 15.

The second outflow duct 24 allows the air to flow out from the exhaust flow passage 15.

The first inflow duct 21, the first outflow duct 22, the second inflow duct 23, and the second outflow duct 24 are provided in the building, and are disposed, for example, in a ceiling space.

Outdoor air (OA) flows into the air supply flow passage 14 via the first inflow duct 21 by the driving of the suction blower 12. The outdoor air passes through the air supply flow passage 14 and is supplied indoor space from the first outflow duct 22 as supply air (SA).

Return air (RA) of the indoor space flows into the exhaust flow passage 15 via the second inflow duct 23 by driving of the exhaust blower 13. The return air passes through the exhaust flow passage 15 and is discharged to the outdoor space from the second outflow duct 24 as exhaust air (EA).

As a result, the indoor ventilation is performed. In this case, in the total heat exchange element 11, heat exchange is performed between the air that flows through the air supply flow passage 14 and the air that flows through the exhaust flow passage 15.

The adsorbent includes a material capable of adsorbing carbon dioxide. Examples of a material capable of adsorbing carbon dioxide include amine, zeolite, silica gel, diatomaceous earth, alumina, activated carbon, and the like. A plurality of materials may be selected and adopted from the above, or a material other than the above may be adopted. The adsorbent may have a granular shape (for example, bead shape (spherical) or pellet shape (cylindrical)). Alternatively, a powdery adsorbent may be adopted. In this case, the powdery adsorbent may be carried on a surface of a base material. The base material may have, for example, a honeycomb shape.

In the present embodiment, the second inflow duct 23 is provided with an adsorption area A1 in which the carbon dioxide contained in the air is adsorbed by the adsorbent. The adsorbent is disposed in the adsorption area A1. For example, the adsorbent is disposed in the adsorption area A1 by fixing a container having air permeability to an inner wall of the second inflow duct 23 and accommodating the adsorbent in the container. Alternatively, the adsorbent may flow into the adsorption area A1 from an adsorbent transport duct (not shown) intersecting the second inflow duct 23.

The carbon dioxide recovery method according to the present embodiment includes an adsorbing step.

In the adsorbing step, in the adsorption area A1, the adsorbent is brought into contact with air containing carbon dioxide to adsorb carbon dioxide onto the adsorbent. At this time, the exhaust blower 13 forms a flow of the air from the indoor space toward the outdoor space in the exhaust flow passage 15, and the air flows through the adsorption area A1 (that is, the second inflow duct 23). As a result, the carbon dioxide is recovered from the air flowing through the adsorption area A1.

As described above, the carbon dioxide recovery device 1 according to the present embodiment includes the exhaust blower 13 that is provided in the exhaust flow passage 15 and that forms a flow of air in the exhaust flow passage 15, the second inflow duct 23 through which air flows into the exhaust flow passage 15, the second outflow duct 24 through which air flows out from the exhaust flow passage 15, and the adsorbent that adsorbs carbon dioxide in the air. An adsorption area A1 in which the carbon dioxide contained in the air is adsorbed by the adsorbent is provided in the second inflow duct 23.

In addition, the carbon dioxide recovery method according to the present embodiment includes an adsorbing step of bringing the air into contact with the adsorbent that adsorbs carbon dioxide in the adsorption area A1 provided in the second inflow duct 23 through which the air flows into the exhaust flow passage 15, to adsorb the carbon dioxide onto the adsorbent. In the adsorbing step, the exhaust blower 13 that is provided in the exhaust flow passage 15 forms a flow of air in the exhaust flow passage 15 to cause the air to flow the adsorption area A1.

The exhaust blower 13 is used to cause the air to flow into the adsorption area A1 provided in the second inflow duct 23, and cause the adsorbent to adsorb the carbon dioxide contained in the air. Since carbon dioxide can be directly recovered from the air that flows through the second inflow duct 23, the recovery efficiency of carbon dioxide can be improved. In addition, since a dedicated blower or the like for generating an air flow is not required, it is possible to save energy and reduce costs as compared with a case of using a dedicated blower or the like, and it is possible to improve the recovery efficiency of carbon dioxide in the entire device.

In addition, the adsorption area A1 is provided in the second inflow duct 23.

A carbon dioxide concentration of indoor air is often increased with human respiration. The indoor air having such a high carbon dioxide concentration flows into the second inflow duct 23. By providing the adsorption area A1 in the second inflow duct 23, it is possible to recover the carbon dioxide from the air having the high carbon dioxide concentration, and it is possible to further increase the recovery efficiency of the carbon dioxide. Further, since the air flowing into the second inflow duct 23 is not affected by the fluctuation of humidity of outside air and the humidity is stable, the carbon dioxide can be stably recovered without the adsorption performance of the carbon dioxide by the adsorbent being deteriorated.

### Modification Example of Embodiment 1

FIG. 2 is a schematic diagram showing a carbon dioxide recovery device 1 according to a modification example of Embodiment 1.

In the present modification example, the adsorption area A1 is provided in the first inflow duct 21.

In the adsorbing step, in the adsorption area A1, the adsorbent is brought into contact with air containing carbon dioxide to adsorb carbon dioxide onto the adsorbent. At this time, the suction blower 12 forms a flow of the air from the outdoor space toward the indoor space in the air supply flow passage 14, and the air flows through the adsorption area A1 (that is, the first inflow duct 21).

The carbon dioxide recovery device 1 according to the present modification example includes the suction blower 12 that is provided in the air supply flow passage 14 and that forms a flow of air in the air supply flow passage 14, the first inflow duct 21 through which air flows into the air supply flow passage 14, the first outflow duct 22 through which air flows out from the air supply flow passage 14, and the adsorbent that adsorbs carbon dioxide in the air. The adsorption area A1 in which the carbon dioxide contained in the air is adsorbed by the adsorbent is provided in the first inflow duct 21.

In addition, the carbon dioxide recovery method according to the present modification example includes an adsorbing step of bringing the air into contact with the adsorbent that adsorbs carbon dioxide in the adsorption area A1 provided in the first inflow duct 21 through which the air flows into the air supply flow passage 14, to adsorb the carbon dioxide onto the adsorbent. In the adsorbing step, the suction blower 12 that is provided in the air supply flow passage 14 forms a flow of air in the air supply flow passage 14 to cause the air to flow the adsorption area A1.

The suction blower 12 is used to cause the air to flow the adsorption area A1 provided in the first inflow duct 21, and cause the adsorbent to adsorb the carbon dioxide contained in the air. Since carbon dioxide can be directly recovered from the air that flows through the first inflow duct 21, the recovery efficiency of carbon dioxide can be improved.

### Embodiment 2

Next, a carbon dioxide recovery device 1 and a carbon dioxide recovery method according to Embodiment 2 will be described. Since the basic configuration of the carbon dioxide recovery device 1 according to the present embodiment is the same as that of Embodiment 1, the carbon dioxide recovery device 1 will be described with reference to the differences.

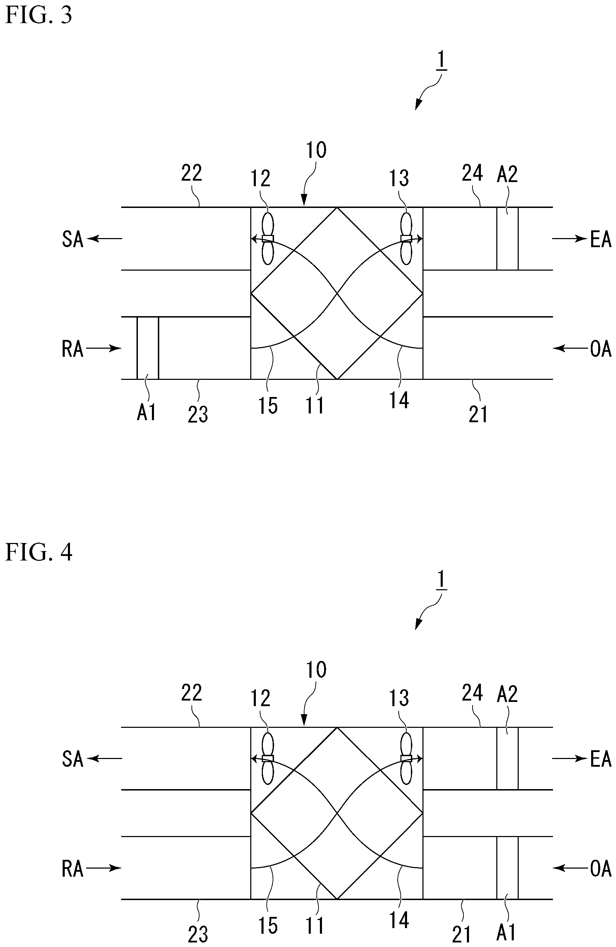

FIG. 3 is a schematic diagram showing a carbon dioxide recovery device 1 according to Embodiment 2.

As shown in FIG. 3, in the present embodiment, a separation area A2 in which carbon dioxide is separated from an adsorbent that adsorbs carbon dioxide is provided in the second outflow duct 24.

The adsorbent which has adsorbed the carbon dioxide in the adsorption area A1 of the second inflow duct 23 is transported to the separation area A2 of the second outflow duct 24. For example, the adsorbent may be transported from the adsorption area A1 to the separation area A2 by using a transport duct (not shown) that connects the second inflow duct 23 and the second outflow duct 24.

The separation area A2 is disposed with the adsorbent transported from the adsorption area A1. For example, the adsorbent which has adsorbed the carbon dioxide is disposed in the separation area A2 by fixing a container having air permeability to an inner wall of the second outflow duct 24 and accommodating the adsorbent in the container. Alternatively, the adsorbent may flow into the separation area A2 from the adsorbent transport duct (not shown) intersecting the second outflow duct 24.

In the separation area A2, carbon dioxide is separated by heating the adsorbent which has adsorbed the carbon dioxide. A heating temperature is, for example, 120 °C to 160 °C. The heating temperature may be appropriately changed depending on the specific material of the adsorbent.

The carbon dioxide recovery method according to the present embodiment includes an adsorbing step and a separation step. Since the adsorbing step is the same as in Embodiment 1, a description thereof will be omitted here.

In the separation step, in the separation area A2, the carbon dioxide is separated from the adsorbent which has adsorbed the carbon dioxide in the adsorbing step by heating the adsorbent which has adsorbed the carbon dioxide.

Here, in a case where the adsorbent adsorbs carbon dioxide in the adsorption area A1, adsorption heat is generated. This adsorption heat is transported from the adsorption area A1 of the second inflow duct 23 to the separation area A2 of the second outflow duct 24 through the exhaust flow passage 15. Therefore, the adsorption heat of the adsorbent in a case of adsorbing carbon dioxide can be used in the separation step.

In addition, the total heat exchange element 11 performs heat exchange between the air flowing through the air supply flow passage 14 and the air flowing through the exhaust flow passage 15. In a case in which the outdoor temperature is higher than the indoor temperature, the heat contained in the air flowing in from the first inflow duct 21 and flowing through the air supply flow passage 14 is transferred to the air flowing through the exhaust flow passage 15 by the heat exchange by the total heat exchange element 11.

That is, the heat contained in the air flowing in from the first inflow duct 21 is transported to the separation area A2 of the second outflow duct 24 by the total heat exchange element 11. Therefore, the heat contained in the air flowing in from the first inflow duct 21 can be used in the separation step.

A heater (not shown) may be provided in the second outflow duct 24 on an upstream side in an air flow direction with respect to the separation area A2. By heating the air flowing through the separation area A2 by the heater, carbon dioxide can be more effectively separated from the adsorbent. Even in this case, by using the adsorption heat and the heat contained in the air flowing in from the first inflow duct 21 in the separation step, the heating energy by the heater can be suppressed, and energy saving can be achieved.

In the carbon dioxide recovery device 1 according to the present embodiment, the second outflow duct 24 is provided with a separation area A2 in which carbon dioxide is separated from the adsorbent which has adsorbed the carbon dioxide.

The carbon dioxide recovery method according to the present embodiment further includes a separation step of separating carbon dioxide from the adsorbent which has adsorbed the carbon dioxide in the separation area A2 provided in the second outflow duct 24. In the separation step, the carbon dioxide is separated from the adsorbent by using the adsorption heat generated when the adsorbent adsorbs the carbon dioxide in the adsorbing step and the heat contained in the air flowing in from the first inflow duct 21.

The adsorption heat generated when the adsorbent adsorbs the carbon dioxide in the adsorption area A1 and the heat contained in the air flowing in from the first inflow duct 21 can be transported to the separation area A2 and used for separating carbon dioxide from the adsorbent. Therefore, for example, it is not necessary to heat air by the heater in order to separate carbon dioxide, or heating energy by the heater can be suppressed, so that energy saving can be achieved, and the recovery efficiency of carbon dioxide in the entire device can be improved.

### Modification Example of Embodiment 2

FIG. 4 is a schematic diagram showing a carbon dioxide recovery device 1 according to a modification example of Embodiment 2.

In the present modification example, the adsorption area A1 is provided in the first inflow duct 21, and the separation area A2 is provided in the second outflow duct 24. That is, the adsorbing step is performed in the adsorption area A1 of the first inflow duct 21. The adsorbent which has adsorbed the carbon dioxide in the adsorption area A1 of the first inflow duct 21 is transported to the separation area A2 of the second outflow duct 24. In the separation area A2 of the second outflow duct 24, the separation step is performed.

The adsorption heat generated when the adsorbent adsorbs the carbon dioxide in the adsorption area A1 of the first inflow duct 21 and the heat contained in the air flowing in from the first inflow duct 21 are transported to the separation area A2 of the second outflow duct 24 by the total heat exchange element 11. Therefore, the adsorption heat generated when the adsorbent adsorbs carbon dioxide and the heat contained in the air flowing in from the first inflow duct 21 can be used in the separation step.

### Embodiment 3

Next, a carbon dioxide recovery device 1 and a carbon dioxide recovery method according to Embodiment 3 will be described. Since the basic configuration of the carbon dioxide recovery device 1 according to the present embodiment is the same as that of Embodiments 1 and 2, the carbon dioxide recovery device 1 will be described with reference to the differences.

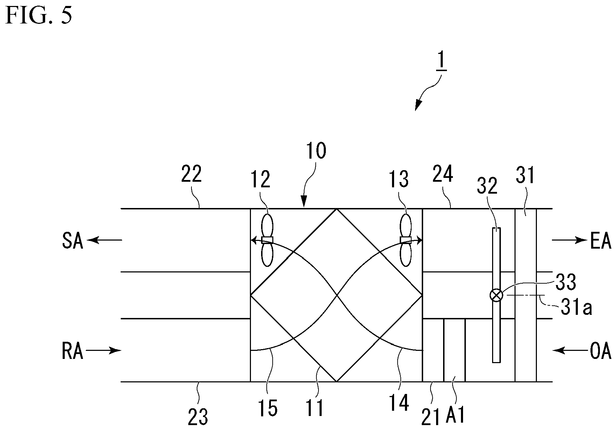

FIG. 5 is a schematic diagram showing a carbon dioxide recovery device 1 according to Embodiment 3.

As shown in FIG. 5, in the present embodiment, the carbon dioxide recovery device 1 includes an adsorbent, a total heat exchanger 10, a first inflow duct 21, a first outflow duct 22, a second inflow duct 23, and a second outflow duct 24, a dehumidifying material 31, a heat exchanger 32, a switching unit 33. In addition, the adsorption area A1 is provided in the first inflow duct 21.

The dehumidifying material 31 is formed in a disk shape with a rotation axis 31a as a center. The dehumidifying material 31 is rotatable about the rotation axis 31a. The dehumidifying material 31 is provided to be located across the first inflow duct 21 and the second outflow duct 24. In the first inflow duct 21, the dehumidifying material 31 is disposed on an upstream side in the air flow direction with respect to the adsorption area A1. The dehumidifying material 31 absorbs moisture in the air flowing through the first inflow duct 21.

The air in which the moisture is absorbed by the dehumidifying material 31 flows through the adsorption area A1. By rotating the dehumidifying material 31, the portion of the dehumidifying material 31 that is disposed in the first inflow duct 21 and has absorbed the moisture can be moved to the second outflow duct 24, and the portion can be dried by the air flowing through the second outflow duct 24.

The heat exchanger 32 performs heat exchange between the air flowing between the adsorption area A1 and the dehumidifying material 31 in the first inflow duct 21 and the air flowing through the second outflow duct 24. In the first inflow duct 21, the heat exchanger 32 is disposed between the adsorption area A1 and the dehumidifying material 31.

The switching unit 33 switches between a state in which heat is transferred from the first inflow duct 21 to the second outflow duct 24 by the heat exchanger 32, a state in which heat is transferred from the second outflow duct 24 to the first inflow duct 21 by the heat exchanger 32, and a state in which heat is not transferred between the first inflow duct 21 and the second outflow duct 24.

The carbon dioxide recovery method according to the present embodiment includes an adsorbing step and a separation step.

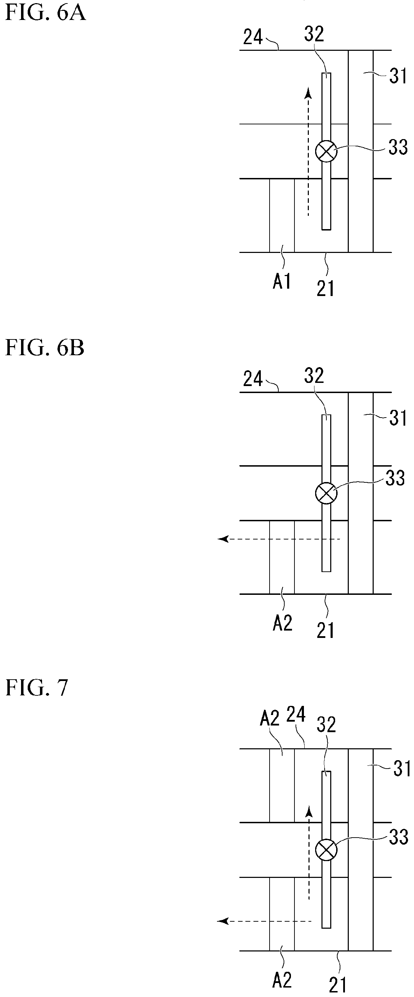

The adsorbing step will be described with reference to FIG. 6A. In the adsorbing step, in the adsorption area A1, the adsorbent is brought into contact with air containing carbon dioxide to adsorb carbon dioxide onto the adsorbent. In this case, the moisture in the air flowing through the first inflow duct 21 is absorbed by the dehumidifying material 31, and thus the dehumidified air flows through the adsorption area A1. In a case where humidity of the air in contact with the adsorbent is high, there is a possibility that an adsorption efficiency of carbon dioxide by the adsorbent is deteriorated. The moisture in the air flowing through the first inflow duct 21 is absorbed by the dehumidifying material 31, so that deterioration in the adsorption efficiency can be prevented.

Here, in a case where the dehumidifying material 31 absorbs the moisture in the air, heat is generated. The switching unit 33 switches the state to the state in which heat is transferred from the first inflow duct 21 to the second outflow duct 24 by the heat exchanger 32. As a result, as shown by a dotted arrow in FIG. 6A, the heat generated by the dehumidifying material 31 is transferred (released) to the second outflow duct 24.

In a case where a temperature of the air in contact with the adsorbent is high, there is a possibility that the adsorption efficiency of carbon dioxide by the adsorbent is deteriorated. By releasing the heat generated by the dehumidifying material 31 to the second outflow duct 24, it is possible to prevent the temperature of the air flowing through the adsorption area A1 from rising, and thus it is possible to prevent deterioration in the adsorption efficiency.

In the present embodiment, in the first inflow duct 21, after the adsorbing step, a separation step of separating carbon dioxide from the adsorbent which has adsorbed carbon dioxide is performed. That is, both the adsorption area A1 and the separation area A2 are provided in the first inflow duct 21.

The adsorbing step will be described with reference to FIG. 6B. In the separation step, in the separation area A2, the carbon dioxide is separated from the adsorbent which has adsorbed the carbon dioxide in the adsorbing step by heating the adsorbent which has adsorbed the carbon dioxide. At this time, the switching unit 33 switches the state to the state in which heat is not transferred between the first inflow duct 21 and the second outflow duct 24. As a result, as shown by a dotted arrow in FIG. 6B, the heat generated by the dehumidifying material 31 is not transferred to the second outflow duct 24 but transported to the separation area A2. Therefore, the heat generated by the dehumidifying material 31 can be used in the separation step.

In the carbon dioxide recovery device 1 according to the present embodiment, the adsorption area A1 is provided in the first inflow duct 21. The carbon dioxide recovery device 1 includes a dehumidifying material 31 that is provided on an upstream side with respect to the adsorption area A1 in a flow direction in which air flows through the first inflow duct 21.

The moisture in the air flowing through the first inflow duct 21 is absorbed by the dehumidifying material 31, and thus dehumidified air flows through the adsorption area A1. Therefore, the adsorption efficiency of carbon dioxide in the adsorption area A1 can be improved.

In addition, the carbon dioxide recovery device 1 includes a heat exchanger 32 that exchanges heat between the air flowing between the adsorption area A1 and the dehumidifying material 31 in the first inflow duct 21 and the air flowing through the second outflow duct 24, a switching unit 33 that switches between a state in which the heat is transferred from the first inflow duct 21 to the second outflow duct 24 by the heat exchanger 32, a state in which the heat is transferred from the second outflow duct 24 to the first inflow duct 21 by the heat exchanger 32, and a state in which the heat is not transferred between the first inflow duct 21 and the second outflow duct 24.

In a case where the carbon dioxide is adsorbed in the adsorption area A1, the switching unit 33 switches the state to the state in which the heat is transferred from the first inflow duct 21 to the second outflow duct 24 by the heat exchanger 32. As a result, the heat generated in a case where the moisture in the air is absorbed by the dehumidifying material 31 can be transferred (released) to the second outflow duct 24. Therefore, it is possible to prevent the adsorption efficiency of carbon dioxide from being deteriorated due to the heat generated by the dehumidifying material 31.

In addition, by switching the switching unit 33 to the state in which the heat is not transferred between the first inflow duct 21 and the second outflow duct 24, the carbon dioxide can also be separated from the adsorbent which has adsorbed the carbon dioxide in the first inflow duct 21 by using the heat generated by the dehumidifying material 31.

### Modification Example of Embodiment 3

FIG. 7 is a schematic diagram showing a carbon dioxide recovery device 1 according to a modification example of Embodiment 3.

In the present modification example, the separation step of separating the carbon dioxide from the adsorbent is performed at two locations of the first inflow duct 21 and the second outflow duct 24. That is, the separation area A2 is provided in the first inflow duct 21 and the second outflow duct 24.

In this case, the switching unit 33 switches a part of the heat generated by the dehumidifying material 31 to be transferred from the first inflow duct 21 to the second outflow duct 24 by the heat exchanger 32. As a result, as shown by a dotted arrow in FIG. 7, a part of the heat generated by the dehumidifying material 31 is transferred to the separation area A2 of the second outflow duct 24 and is used in the separation step in the separation area A2 of the second outflow duct 24. In addition, another part of the heat generated by the dehumidifying material 31 is transported to the separation area A2 of the first inflow duct 21 and is used in the separation step in the separation area A2 of the first inflow duct 21.

As a result, since the separation step can be performed at two locations, the recovery efficiency of carbon dioxide can be further improved.

### Embodiment 4

Next, a carbon dioxide recovery device 1 and a carbon dioxide recovery method according to Embodiment 4 will be described. Since the basic configuration of the carbon dioxide recovery device 1 according to the present embodiment is the same as that of Embodiment 3, the carbon dioxide recovery device 1 will be described with reference to the differences.

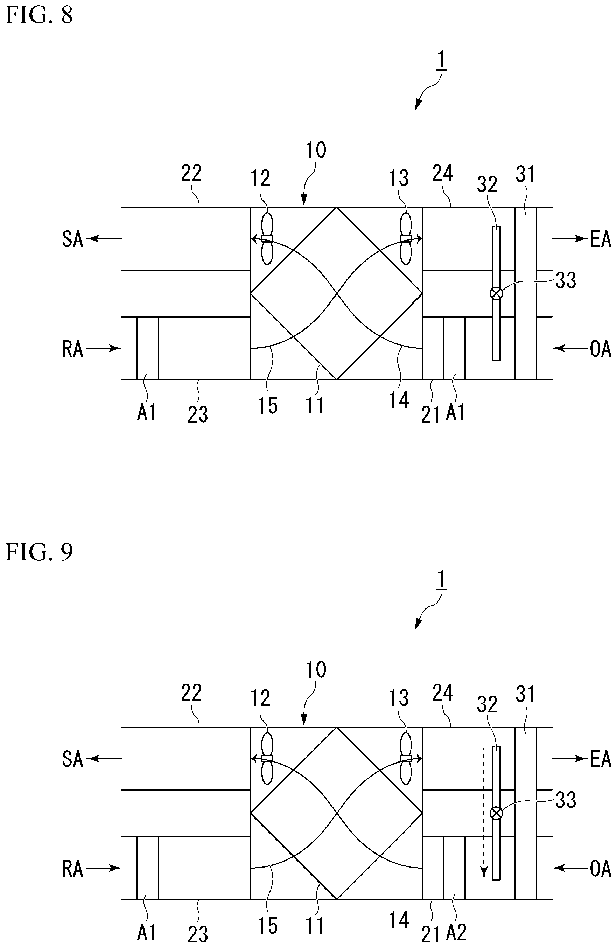

FIG. 8 is a schematic diagram showing a carbon dioxide recovery device 1 according to Embodiment 4.

As shown in FIG. 8, in the carbon dioxide recovery device 1 according to the present embodiment, the adsorbing step is performed in both the first inflow duct 21 and the second inflow duct 23. That is, the adsorption area A1 is provided in the first inflow duct 21 and the second inflow duct 23.

As a result, since the carbon dioxide can be recovered from both the air flowing through the first inflow duct 21 and the air flowing through the second inflow duct 23, the amount of the recovered carbon dioxide is increased, and the recovery efficiency of the carbon dioxide can be further improved.

In the present embodiment, the second outflow duct 24 may be provided with a separation area A2 for separating carbon dioxide from the adsorbent which has adsorbed carbon dioxide. In this case, the adsorbent which has adsorbed the carbon dioxide in the adsorption area A1 of the first inflow duct 21 or the second inflow duct 23 is transported to the separation area A2 of the second outflow duct 24. In the separation area A2, carbon dioxide is separated by heating the adsorbent which has adsorbed the carbon dioxide.

### Embodiment 5

Next, a carbon dioxide recovery device 1 and a carbon dioxide recovery method according to Embodiment 5 will be described. Since the basic configuration of the carbon dioxide recovery device 1 according to the present embodiment is the same as that of Embodiment 4, the carbon dioxide recovery device 1 will be described with reference to the differences.

FIG. 9 is a schematic diagram showing a carbon dioxide recovery device 1 according to Embodiment 5.

As shown in FIG. 9, in the carbon dioxide recovery device 1 according to Embodiment 5, the adsorbing step is performed in the second inflow duct 23, and the separation step is performed in the first inflow duct 21. That is, the adsorption area A1 is provided in the second inflow duct 23, and the separation area A2 is provided in the first inflow duct 21.

In this case, the switching unit 33 switches the state to the state in which heat is transferred from the second outflow duct 24 to the first inflow duct 21 by the heat exchanger 32. The adsorption heat in the adsorption area A1 of the second inflow duct 23 is transported to the second outflow duct 24 through the exhaust flow passage 15. As shown by a dotted arrow in FIG. 9, the adsorption heat transported to the second outflow duct 24 is transferred to the first inflow duct 21 by the heat exchanger 32. Therefore, the adsorption heat in the adsorption area A1 of the second inflow duct 23 can be used in the separation step in the separation area A2 of the first inflow duct 21.

### Embodiment 6

Next, a carbon dioxide recovery device 2 and a carbon dioxide recovery method according to Embodiment 6 will be described.

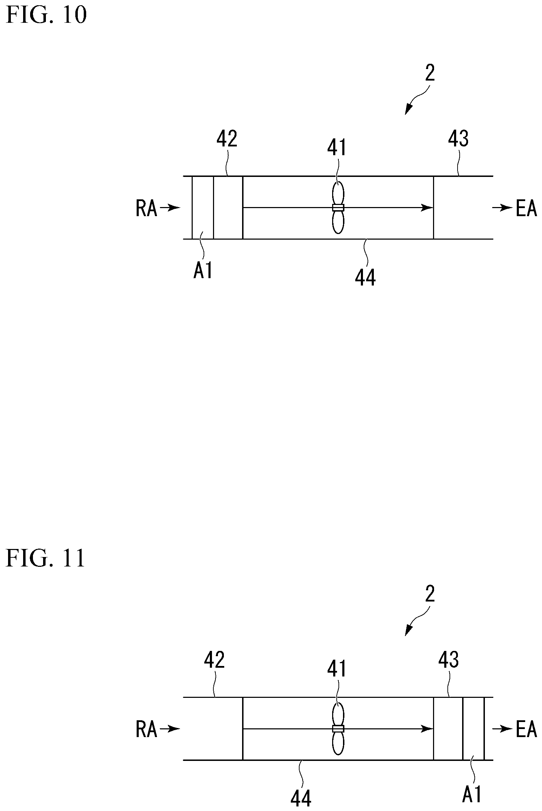

FIG. 10 is a schematic diagram showing a carbon dioxide recovery device 2 according to Embodiment 6.

As shown in FIG. 10, a carbon dioxide recovery device 2 according to Embodiment 6 includes an adsorbent, an exhaust ventilation fan 41, an inflow duct 42, and an outflow duct 43. Since the configuration of the adsorbent is the same as that of Embodiment 1, the description thereof will be omitted here.

The exhaust ventilation fan 41 is provided in an exhaust flow passage 44 for discharging air from the indoor space to the outdoor space. The exhaust ventilation fan 41 forms a flow of air from the indoor space to the outdoor space.

The exhaust ventilation fan 41 is an example of a blower. The exhaust flow passage 44 is an example of an air flow passage.

The inflow duct 42 allows air to flow into the exhaust flow passage 44. The inflow duct 42 is disposed on an indoor side of the exhaust flow passage 44.

The outflow duct 43 allows the air to flow out from the exhaust flow passage 44. The outflow duct 43 is disposed on an outdoor side of the exhaust flow passage 44.

Return air (RA) of the indoor space flows into the exhaust flow passage 44 via the inflow duct 42 by driving of the exhaust ventilation fan 41. The return air passes through the exhaust flow passage 44 and is discharged to the outdoor space from the outflow duct 43 as exhaust air (EA). As a result, the indoor ventilation is performed.

In the present embodiment, the inflow duct 42 is provided with an adsorption area A1 in which carbon dioxide contained in the air is adsorbed by the adsorbent. That is, the adsorbent is disposed in the adsorption area A1. For example, the adsorbent is disposed in the adsorption area A1 by fixing a container having air permeability to an inner wall of the inflow duct 42 and accommodating the adsorbent in the container. Alternatively, the adsorbent may flow into the adsorption area A1 from an adsorbent transport duct (not shown) intersecting the inflow duct 42.

The carbon dioxide recovery method according to the present embodiment includes an adsorbing step.

In the adsorbing step, in the adsorption area A1, the adsorbent is brought into contact with air containing carbon dioxide to adsorb carbon dioxide onto the adsorbent. At this time, the exhaust ventilation fan 41 forms a flow of the air from the indoor space toward the outdoor space in the exhaust flow passage 44, and the air flows through the adsorption area A1 (that is, the inflow duct 42). As a result, the carbon dioxide is recovered from the air flowing through the adsorption area A1.

As described above, the carbon dioxide recovery device 2 according to the present embodiment includes the exhaust ventilation fan 41 that is provided in the exhaust flow passage 44 and that forms a flow of air in the exhaust flow passage 44, the inflow duct 42 through which air flows into the exhaust flow passage 44, the outflow duct 43 through which air flows out from the exhaust flow passage 44, and the adsorbent that adsorbs carbon dioxide in the air. The adsorption area A1 in which the carbon dioxide contained in the air is adsorbed by the adsorbent is provided in the inflow duct 42.

In addition, the carbon dioxide recovery method according to the present embodiment includes an adsorbing step of bringing the air into contact with the adsorbent that adsorbs carbon dioxide in the adsorption area A1 provided in the inflow duct 42 through which the air flows into the exhaust flow passage 44, to adsorb the carbon dioxide onto the adsorbent. In the adsorbing step, the exhaust ventilation fan 41 that is provided in the exhaust flow passage 44 forms a flow of air in the exhaust flow passage 44 to cause the air to flow the adsorption area A1.

The exhaust ventilation fan 41 is used to cause the air to flow the adsorption area A1 provided in the inflow duct 42, and cause the adsorbent to adsorb the carbon dioxide contained in the air. Since carbon dioxide can be directly recovered from the air that flows through the inflow duct 42, the recovery efficiency of carbon dioxide can be improved.

In the present embodiment, the outflow duct 43 may be provided with a separation area A2 for separating carbon dioxide from the adsorbent which has adsorbed carbon dioxide. In this case, the adsorbent which has adsorbed the carbon dioxide in the adsorption area A1 of the inflow duct 42 is transported to the separation area A2 of the outflow duct 43. In the separation area A2, for example, carbon dioxide is separated by heating the adsorbent which has adsorbed the carbon dioxide.

In addition, in the inflow duct 42, after the adsorbing step, a separation step of separating carbon dioxide from the adsorbent which has adsorbed carbon dioxide is performed. That is, both the adsorption area A1 and the separation area A2 are provided in the inflow duct 42.

### Modification Example of Embodiment 6

FIG. 11 is a schematic diagram showing a carbon dioxide recovery device 2 according to a modification example of Embodiment 6.

In the present modification example, the adsorption area A1 is provided in the outflow duct 43.

In the adsorbing step, in the adsorption area A1, the adsorbent is brought into contact with air containing carbon dioxide to adsorb carbon dioxide onto the adsorbent. At this time, the exhaust ventilation fan 41 forms a flow of the air from the outdoor space toward the indoor space in the exhaust flow passage 44, and the air flows through the adsorption area A1 (that is, the outflow duct 43).

The carbon dioxide recovery device 2 according to the present modification example includes the exhaust ventilation fan 41 that is provided in the exhaust flow passage 44 and that forms a flow of air in the exhaust flow passage 44, the inflow duct 42 through which air flows into the exhaust flow passage 44, the outflow duct 43 through which air flows out from the exhaust flow passage 44, and the adsorbent that adsorbs carbon dioxide in the air. The adsorption area A1 in which the carbon dioxide contained in the air is adsorbed by the adsorbent is provided in the outflow duct 43.

In addition, the carbon dioxide recovery method according to the present embodiment includes an adsorbing step of bringing the air into contact with the adsorbent that adsorbs carbon dioxide in the adsorption area A1 provided in the outflow duct 43 through which the air flows into the exhaust flow passage 44, to adsorb the carbon dioxide onto the adsorbent. In the adsorbing step, the exhaust ventilation fan 41 that is provided in the exhaust flow passage 44 forms a flow of air in the exhaust flow passage 44 to cause the air to flow the adsorption area A1.

The exhaust ventilation fan 41 is used to cause the air to flow the adsorption area A1 provided in the outflow duct 43, and cause the adsorbent to adsorb the carbon dioxide contained in the air. Since carbon dioxide can be directly recovered from the air that flows through the outflow duct 43, the recovery efficiency of carbon dioxide can be improved.

In the present modification example, the inflow duct 42 may be provided with a separation area A2 for separating carbon dioxide from the adsorbent which has adsorbed carbon dioxide. In this case, the adsorbent which has adsorbed the carbon dioxide in the adsorption area A1 of the outflow duct 43 is transported to the separation area A2 of the inflow duct 42. In the separation area A2, for example, carbon dioxide is separated by heating the adsorbent which has adsorbed the carbon dioxide.

In addition, in the outflow duct 43, after the adsorbing step, a separation step of separating carbon dioxide from the adsorbent which has adsorbed carbon dioxide may be performed. That is, both the adsorption area A1 and the separation area A2 are provided in the outflow duct 43.

### Embodiment 7

Next, a carbon dioxide recovery system 3 and a carbon dioxide recovery method according to Embodiment 7 will be described.

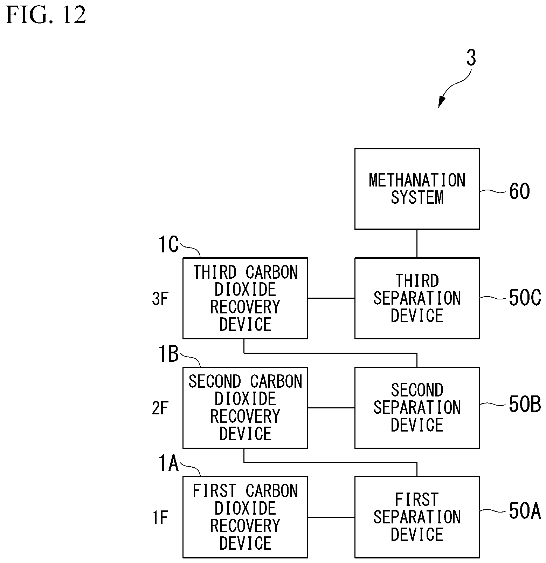

FIG. 12 is a block diagram showing a carbon dioxide recovery system 3 according to Embodiment 7.

As shown in FIG. 12, the carbon dioxide recovery system 3 according to the present embodiment includes a first carbon dioxide recovery device 1A, a second carbon dioxide recovery device 1B, a third carbon dioxide recovery device 1C, a first separation device 50A, a second separation device 50B, a third separation device 50C, and a methanation system 60.

The carbon dioxide recovery devices 1A, 1B, and 1C and the separation devices 50A, 50B, and 50C are installed in a common building. For example, the first carbon dioxide recovery device 1A and the first separation device 50A are installed on the first floor, the second carbon dioxide recovery device 1B and the second separation device 50B are installed on the second floor, and the third carbon dioxide recovery device 1C and the third separation device 50C are installed on the third floor. The third carbon dioxide recovery device 1C and the third separation device 50C may be installed on the first floor, and the first carbon dioxide recovery device 1A and the first separation device 50A may be installed on the third floor.

The configurations of the carbon dioxide recovery devices 1A, 1B, and 1C are the same as the configuration of the carbon dioxide recovery device 1 according to Embodiment 1. That is, the carbon dioxide recovery devices 1A, 1B, and 1C each include the adsorbent, the total heat exchanger 10, the first inflow duct 21, the first outflow duct 22, the second inflow duct 23, and the second outflow duct 24. The adsorption area A1 in which the carbon dioxide contained in the air is adsorbed by the adsorbent is provided in the second inflow duct 23. The adsorption area A1 may be provided in the first inflow duct 21.

The separation devices 50A, 50B, and 50C have a function of separating carbon dioxide from the adsorbent. The separation devices 50A, 50B, and 50C may include a heater and may separate carbon dioxide by heating the adsorbent. Alternatively, the separation devices 50A, 50B, and 50C may include a vacuum pump, and separate carbon dioxide by placing the adsorbent under a reduced pressure condition.

In the first separation device 50A, the adsorbent which has absorbed carbon dioxide is transported from the first carbon dioxide recovery device 1A. The carbon dioxide separated from the adsorbent in the first separation device 50A is transported to the second carbon dioxide recovery device 1B. In the second separation device 50B, the adsorbent which has adsorbed the carbon dioxide is transported from the second carbon dioxide recovery device 1B.

The carbon dioxide separated from the adsorbent in the second separation device 50B is transported to the third carbon dioxide recovery device 1C. In the third separation device 50C, the adsorbent which has adsorbed the carbon dioxide is transported from the third carbon dioxide recovery device 1C. The carbon dioxide separated from the adsorbent in the third separation device 50C is transported to the methanation system 60.

The methanation system 60 has a function of generating methane using carbon dioxide, hydrogen, water, electric power, and the like. For example, the methanation system 60 is installed on a roof of a building.

The carbon dioxide recovery method according to the present embodiment includes an adsorbing step, an adsorbent transporting step, a separation step, and a carbon dioxide transporting step.

In the adsorbing step, the adsorbent is brought into contact with air in the adsorption area A1 of the first carbon dioxide recovery device 1A to adsorb carbon dioxide onto the adsorbent.

In the adsorbent transporting step, the adsorbent which has adsorbed the carbon dioxide is transported from the adsorption area A1 of the first carbon dioxide recovery device 1A to the first separation device 50A.

In the separation step, the first separation device 50A separates carbon dioxide from the adsorbent which has adsorbed the carbon dioxide.

In the carbon dioxide transporting step, the separated carbon dioxide is transported to the second carbon dioxide recovery device 1B.

Similarly, in the second carbon dioxide recovery device 1B and the second separation device 50B, the adsorbing step, the adsorbent transporting step, the separation step, and the carbon dioxide transporting step are also performed.

That is, in the second adsorbing step, the adsorbent is brought into contact with air in the adsorption area A1 of the second carbon dioxide recovery device 1B to adsorb carbon dioxide onto the adsorbent. At this time, since the air flowing through the second carbon dioxide recovery device 1B is mixed with the carbon dioxide transported from the first separation device 50A, a carbon dioxide concentration is increased as compared with the air flowing through the first carbon dioxide recovery device 1A.

In a second adsorbent transporting step, the adsorbent which has adsorbed the carbon dioxide is transported from the adsorption area A1 of the second carbon dioxide recovery device 1B to the second separation device 50B.

In a second separation step, the second separation device 50B separates carbon dioxide from the adsorbent which has adsorbed the carbon dioxide.

In a second carbon dioxide transporting step, the separated carbon dioxide is transported to the third carbon dioxide recovery device 1C.

Similarly, in the third carbon dioxide recovery device 1C and the third separation device 50C, the adsorbing step, the adsorbent transporting step, the separation step, and the carbon dioxide transporting step are also performed.

That is, in a third adsorbing step, the adsorbent is brought into contact with air in the adsorption area A1 of the third carbon dioxide recovery device 1C to adsorb carbon dioxide onto the adsorbent. At this time, since the air flowing through the third carbon dioxide recovery device 1C is mixed with the carbon dioxide transported from the second separation device 50B, a carbon dioxide concentration is further increased.

In a third adsorbent transporting step, the adsorbent which has adsorbed the carbon dioxide is transported from the adsorption area A1 of the third carbon dioxide recovery device 1C to the third separation device 50C.

In a third separation step, the third separation device 50C separates carbon dioxide from the adsorbent which has adsorbed the carbon dioxide.

In a third carbon dioxide transporting step, the separated carbon dioxide is transported to the methanation system 60. In the methanation system 60, carbon dioxide is recovered.

As the process proceeds from the first carbon dioxide recovery device 1A to the third carbon dioxide recovery device 1C, the carbon dioxide concentration of the air to be adsorbed can be increased, so that the recovery efficiency of carbon dioxide is improved. In addition, a step of concentrating carbon dioxide is not necessary. Further, the recovered carbon dioxide can be easily transported to the methanation system 60.

As described above, the carbon dioxide recovery method according to the present embodiment includes the separation step of separating carbon dioxide from the adsorbent which has adsorbed the carbon dioxide in the adsorbing step, the carbon dioxide transporting step of transporting the carbon dioxide separated in the separation step to a second carbon dioxide recovery device 1B, and the second adsorbing step of bringing the adsorbent that adsorbs carbon dioxide into contact with air in the second carbon dioxide recovery device 1B to adsorb the carbon dioxide onto the adsorbent.

In the second adsorbing step, the carbon dioxide separated in the separation step is mixed, and the carbon dioxide contained in the air in which the carbon dioxide concentration is increased is adsorbed onto the adsorbent, so that the recovery efficiency of the carbon dioxide can be further improved.

### Embodiment 8

Next, a carbon dioxide recovery system 4 and a carbon dioxide recovery method according to Embodiment 8 will be described.

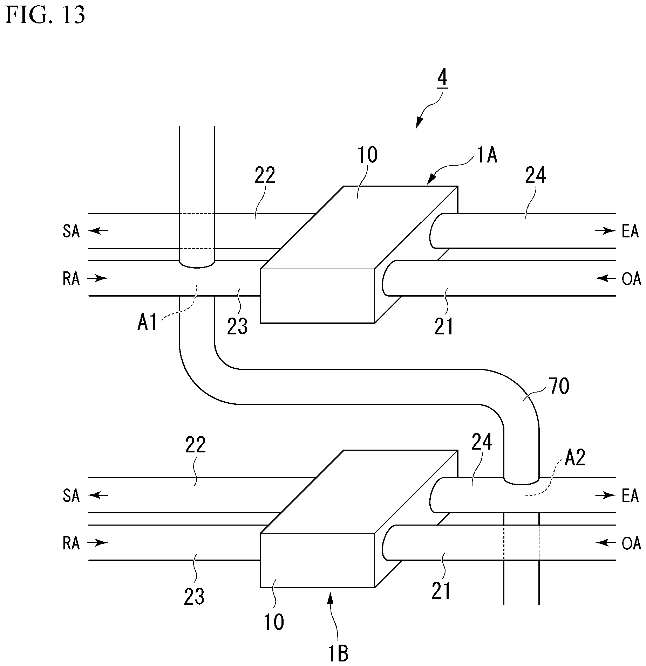

FIG. 13 is a perspective view showing a carbon dioxide recovery system 4 according to Embodiment 8.

As shown in FIG. 13, the carbon dioxide recovery system 4 according to the present embodiment includes a first carbon dioxide recovery device 1A, a second carbon dioxide recovery device 1B, and a transport duct 70. The second carbon dioxide recovery device 1B is disposed below the first carbon dioxide recovery device 1A.

The basic configurations of the carbon dioxide recovery devices 1A and 1B are the same as the carbon dioxide recovery device 1 according to Embodiment 1. That is, the carbon dioxide recovery devices 1A and 1B each include the total heat exchanger 10, the first inflow duct 21, the first outflow duct 22, the second inflow duct 23, and the second outflow duct 24. In the present embodiment, a common adsorbent is used in the carbon dioxide recovery devices 1A and 1B. The adsorption area A1 in which the carbon dioxide contained in the air is adsorbed onto the adsorbent is provided in the second inflow duct 23 of the first carbon dioxide recovery device 1A.

The adsorbent which has adsorbed the carbon dioxide in the adsorption area A1 of the first carbon dioxide recovery device 1A is transported to the second outflow duct 24 of the second carbon dioxide recovery device 1B. A separation area A2 in which carbon dioxide is separated from the adsorbent which has adsorbed the carbon dioxide is provided in the second outflow duct 24 of the second carbon dioxide recovery device 1B.

The transport duct 70 connects the second inflow duct 23 of the first carbon dioxide recovery device 1A and the second outflow duct 24 of the second carbon dioxide recovery device 1B to each other. The transport duct 70 is provided to intersect each of the second inflow duct 23 of the first carbon dioxide recovery device 1A and the second outflow duct 24 of the second carbon dioxide recovery device 1B. The adsorbent flows into the transport duct 70. In addition, the adsorbent which has adsorbed the carbon dioxide in the second inflow duct 23 of the first carbon dioxide recovery device 1A is transported to the second outflow duct 24 of the second carbon dioxide recovery device 1B by using the transport duct 70.

The carbon dioxide recovery method according to the present embodiment includes an adsorbing step, an adsorbent transporting step, and a separation step.

In the adsorbing step, the adsorbent flows into the transport duct 70, and the adsorbent is brought into contact with the air in the adsorption area A1 provided in the second inflow duct 23 of the first carbon dioxide recovery device 1A to adsorb carbon dioxide onto the adsorbent.

In the adsorbent transporting step, the adsorbent which has adsorbed the carbon dioxide in the adsorbing step is transported from the second inflow duct 23 of the first carbon dioxide recovery device 1A to the second outflow duct 24 of the second carbon dioxide recovery device 1B by the transport duct 70.

In the separation step, the carbon dioxide is separated from the adsorbent which has adsorbed the carbon dioxide, in the separation area A2 provided in the second outflow duct 24 of the second carbon dioxide recovery device 1B.

As described above, the carbon dioxide recovery method according to the present embodiment includes the adsorbent transporting step of transporting the adsorbent which has adsorbed the carbon dioxide in the adsorbing step to the second carbon dioxide recovery device 1B that is disposed below the first carbon dioxide recovery device 1A, and the separation step of separating carbon dioxide from the adsorbent which has adsorbed the carbon dioxide, in the second carbon dioxide recovery device 1B.

Since the adsorbent which has adsorbed the carbon dioxide is transported to the second carbon dioxide recovery device 1B that is disposed below the first carbon dioxide recovery device 1A, as compared with a case where the adsorbent is transported upward by a conveyor, a blower, or the like, energy saving can be achieved, and the recovery efficiency of carbon dioxide in the entire system can be improved.

However, the technical scope of the present invention is not limited to the above embodiments, and various modifications can be made without departing from the gist of the present invention.

In Embodiments 1 and 2, the adsorption area A1 may be provided in both the first inflow duct 21 and the second inflow duct 23.

In Embodiments 3 and 4, the separation area A2 may be provided in the second inflow duct 23.

A gas cylinder capable of storing carbon dioxide may be provided instead of the methanation system 60 described in Embodiment 7, or in addition to the methanation system 60. In this case, the carbon dioxide separated from the adsorbent by the separation devices 50A, 50B, and 50C can be stored in the gas cylinder. The gas cylinder in which the carbon dioxide is stored may be transported to another place (for example, a factory or the like), and the carbon dioxide may be used.

In addition, the above-described embodiments or modification examples may be appropriately combined.

For example, in the carbon dioxide recovery system 3 according to Embodiment 7, the carbon dioxide recovery devices 2 according to Embodiment 5 or 6 may be used as the carbon dioxide recovery devices 1A, 1B, and 1C.

### List of Reference Signs

- 1, 2:: Carbon dioxide recovery device
- 10:: Total heat exchanger
- 12:: Suction blower (blower)
- 13:: Exhaust blower (blower)
- 14:: Air supply flow passage (air flow passage)
- 15:: Exhaust flow passage (air flow passage)
- 21:: First inflow duct (inflow duct)
- 22:: First outflow duct (outflow duct)
- 23:: Second inflow duct (inflow duct)
- 24:: Second outflow duct (outflow duct)
- 31:: Dehumidifying material
- 32:: Heat exchanger
- 33:: Switching unit
- 42:: Inflow duct
- 43:: Outflow duct
- 44:: Exhaust flow passage (air flow passage)
- A1:: Adsorption area
- A2:: Separation area

## Claims

1. A carbon dioxide recovery device comprising:
a blower that is provided in an air flow passage through which air flows between an indoor space and an outdoor space and that forms a flow of air in the air flow passage;
an inflow duct through which air flows into the air flow passage;
an outflow duct through which air flows out from the air flow passage; and
an adsorbent that adsorbs carbon dioxide in air,
wherein at least one of the inflow duct and the outflow duct is provided with an adsorption area in which the carbon dioxide contained in air is adsorbed by the adsorbent.

2. The carbon dioxide recovery device according to Claim 1,
further comprising:
a total heat exchanger that includes a suction blower and an exhaust blower as the blower,
wherein the suction blower is provided in an air supply flow passage formed in the total heat exchanger as the air flow passage,
the exhaust blower is provided in an exhaust flow passage formed in the total heat exchanger as the air flow passage,
the inflow duct includes a first inflow duct through which air flows into the air supply flow passage and a second inflow duct through which air flows into the exhaust flow passage,
the outflow duct includes a first outflow duct through which air flows out from the air supply flow passage and a second outflow duct through which air flows out from the exhaust flow passage, and
the adsorption area is provided in at least one of the first inflow duct and the second inflow duct.

3. The carbon dioxide recovery device according to Claim 2,
wherein a separation area for separating the carbon dioxide from the adsorbent which has adsorbed the carbon dioxide is provided in the second outflow duct.

4. The carbon dioxide recovery device according to Claim 2,
wherein the adsorption area is provided in the first inflow duct, and
the carbon dioxide recovery device further comprises a dehumidifying material that is provided on an upstream side with respect to the adsorption area in a flow direction in which air flows through the first inflow duct.

5. The carbon dioxide recovery device according to Claim 4,
further comprising:
a heat exchanger that exchanges heat between
air flowing between the adsorption area and the dehumidifying material in the first inflow duct and
air flowing through the second outflow duct; and
a switching unit that switches between a state in which heat is transferred from the first inflow duct to the second outflow duct by the heat exchanger, a state in which heat is transferred from the second outflow duct to the first inflow duct by the heat exchanger, and a state in which heat is not transferred between the first inflow duct and the second outflow duct.

6. The carbon dioxide recovery device according to any one of Claims 2 to 5,
wherein the adsorption area is provided in both the first inflow duct and the second inflow duct.

7. A carbon dioxide recovery method of recovering carbon dioxide by using a carbon dioxide recovery device that includes a blower that is provided in an air flow passage through which air flows between an indoor space and an outdoor space and that forms a flow of air in the air flow passage, an inflow duct through which air flows into the air flow passage, an outflow duct through which air flows out from the air flow passage, and an adsorbent that adsorbs carbon dioxide in air,
the carbon dioxide recovery method comprising:
an adsorbing step of bringing the adsorbent into contact with air in an adsorption area provided in at least one of the inflow duct and the outflow duct to adsorb the carbon dioxide onto the adsorbent,
wherein in the adsorbing step, the blower forms a flow of air in the air flow passage to cause air to flow in the adsorption area.

8. A carbon dioxide recovery method of recovering carbon dioxide by using a carbon dioxide recovery device that includes a total heat exchanger in which an air supply flow passage and an exhaust flow passage are formed and that has a suction blower provided in the air supply flow passage and an exhaust blower provided in the exhaust flow passage, a first inflow duct through which air flows into the air supply flow passage, a first outflow duct through which air flows out from the air supply flow passage, a second inflow duct through which air flows into the exhaust flow passage, a second outflow duct through which air flows out from the exhaust flow passage, and an adsorbent that adsorbs carbon dioxide in air,
the carbon dioxide recovery method comprising:
an adsorbing step of bringing the adsorbent into contact with air in an adsorption area provided in at least one of the first inflow duct and the second inflow duct to adsorb the carbon dioxide onto the adsorbent,
wherein in the adsorbing step, the suction blower or the exhaust blower forms a flow of air in the air supply flow passage or the exhaust flow passage to cause air to flow in the adsorption area.

9. The carbon dioxide recovery method according to Claim 8,
further comprising:
a separation step of separating the carbon dioxide from the adsorbent which has adsorbed the carbon dioxide, in the second outflow duct,
wherein in the separation step, the carbon dioxide is separated from the adsorbent by using an adsorption heat generated when the adsorbent adsorbs carbon dioxide in the adsorbing step and heat contained in the air flowing in from the first inflow duct.

10. The carbon dioxide recovery method according to Claim 8,
further comprising:
a separation step of separating the carbon dioxide from the adsorbent which has adsorbed the carbon dioxide in the adsorbing step;
a carbon dioxide transporting step of transporting the carbon dioxide separated in the separation step to a second carbon dioxide recovery device; and
a second adsorbing step of bringing the adsorbent that adsorbs carbon dioxide into contact with air in the second carbon dioxide recovery device to adsorb the carbon dioxide onto the adsorbent.

11. The carbon dioxide recovery method according to Claim 8,
further comprising:
an adsorbent transporting step of transporting the adsorbent which has adsorbed the carbon dioxide in the adsorbing step to a second carbon dioxide recovery device that is disposed below the carbon dioxide recovery device; and
a separation step of separating the carbon dioxide from the adsorbent which has adsorbed the carbon dioxide in the second carbon dioxide recovery device.
